# EUROPEAN PATENT APPLICATION

(11) **EP 4 582 983 A1**
(43) Date of publication of application: **09.07.2025**
(21) Application number: 23876338.7
(22) Date of filing: 18.08.2023
(51) Int. Cl.: G06F 21/12, G06F 21/62

(54) **APPLICATION PERMISSION MANAGEMENT METHOD, ELECTRONIC DEVICE, AND COMPUTER-READABLE STORAGE MEDIUM**

(30) Priority: 10.10.2022 CN 202211263500
(71) Applicant: ZTE CORPORATION, Shenzhen, Guangdong 518057 (CN)
(72) Inventor: YANG, Haicheng, Shenzhen, Guangdong 518057 (CN); ZHOU, Jinxing, Shenzhen, Guangdong 518057 (CN)
(74) Representative: Canzler & Bergmeier Patentanwälte Partnerschaft mbB
(86) International application number: PCT/CN2023/113731
(87) International publication number: WO 2024/078133

(57) **Abstract**

The present application provides an application permission management method, an electronic device, and a computer-readable storage medium. The application permission management method comprises: determining whether an application program has a behavior of abusing invocation permission for private data; and when the application program has the behavior of abusing the invocation permission for the private data, revoking the invocation permission of the application program for the private data.

## Description

### CROSS-REFERENCE TO RELATED APPLICATION

The present disclosure claims the priority of Chinese Patent Application No. 202211263500.5, filed on October 10, 2022, the contents of which are incorporated herein in their entirety by reference.

### TECHNICAL FIELD

Embodiments of the present disclosure relate to the field of terminal technology, and in particular, to an application permission management method, an electronic device, and a computer-readable storage medium.

### BACKGROUND

In the Android system, permissions are divided into two categories. One category includes ordinary permissions such as permission to access a network, or permission to access a Wireless Fidelity (WiFi), which have no potential harm on user's privacy and security. The other category includes dangerous permissions such as permissions to access address book, photo album, or location information, which may threaten user's privacy and security.

For safety consideration, the Android system introduces an permission application mechanism from the Android 6.0 version, that is, any application program dynamically applies for relevant dangerous permissions before using certain functions. Every time before the application program uses the function with the dangerous permission, whether the application program has the dangerous permission is checked, and if the application program does not have the dangerous permission, the application program applies the dangerous permission and after the dangerous permission is applied sucessfully, the application program can use the function with the dangerous permission. For example, if the application program expects to use the function of photographing, whether the application program has a permission to use a camera is first determined, if the application program has no permission to use the camera, the application program applies for the permission to use the camera. After the user authorizes (i.e., gives the permission), the application program can use the camera, and if the user refuses to give the permission, the application program cannot use the camera. Even so, there is still a problem of private data leakage.

### SUMMARY

In a first aspect, an embodiment of the present disclosure provides an application permission management method, including: determining whether an application program has a behavior of abusing a permission of calling private data; and revoking the permission, of calling the private data, for the application program, in response to the application program having the behavior of abusing the permission of calling the private data.

In a second aspect, an embodiment of the present disclosure provides an electronic device, including: at least one processor; and a memory storing at least one computer program which, when executed by the at least one processor, causes the at least one processor to implement the application permission management method described above.

In a third aspect, an embodiment of the present disclosure provides a computer-readable storage medium, storing thereon a computer program which, when executed by a processor, causes the processor to implement the application permission management method described above.

### BRIEF DESCRIPTION OF DRAWINGS

Fig. 1 is a flowchart of an application permission management method provided by an embodiment of the present disclosure;
Fig. 2 is a flowchart of an application permission management method provided by an example of the embodiment of the present disclosure; and
Fig. 3 is a block diagram of an application permission management apparatus provided by an embodiment of the present disclosure.

### DETAIL DESCRIPTION OF EMBODIMENTS

In order to make those skilled in the art better understand the technical solutions of the present disclosure, an application permission management method, an electronic device, and a computer-readable storage medium provided by the present disclosure, are described in detail below with reference to the accompanying drawings.

Exemplary embodiments are described in detail below with reference to the accompanying drawings, but the described exemplary embodiments may be embodied in different forms, and the present disclosure should not be construed as limited to the embodiments set forth herein. The embodiments are illustrated to make the present disclosure more thorough and complete, and for those skilled in the art more fully understanding the scope of the present disclosure.

The respective embodiments of the present disclosure and the respective features in the embodiments may be combined with each other if no conflict is incurred.

As used herein, a term "and/or" includes any and all combinations of at least one of listed items.

The terms used herein are for a purpose of describing particular embodiments only, and are not intended to limit the present disclosure. As used herein, singular forms "a", "an" and "the" include plural forms as well (i.e., to represent at least one), unless the context clearly defines otherwise. It should further be understood that terms "includes/comprises" and/or "made of/consisted of" used in the present disclosure, specify a presence of at least one of recited features, integers, steps, operations, elements or components, but do not preclude a presence or an addition of at least one of other features, integers, steps, operations, elements, components or groups thereof.

Unless otherwise defined, meanings of all terms (including technical terms and scientific terms) used herein are the same as meanings commonly understood by those skilled in the art. It should further be understood that terms, such as those defined in common dictionaries, should be construed as having a meaning that is consistent with that in background of the existing art and the present disclosure, and should not be construed as having an idealized or over-formal meaning, unless expressly defined herein.

In a current application permission management method, a dangerous permission is authorized by a user, but the user cannot control the behavior of the application program after authorizing the permission, so that there still exists a risk of leakage of private data of the user.

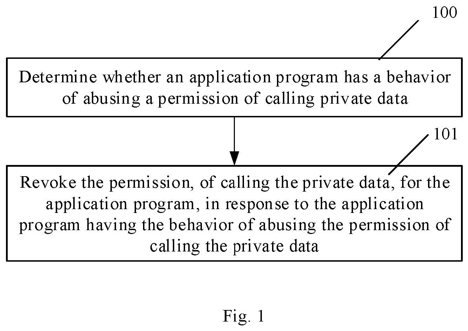

Fig. 1 is a flowchart of an application permission management method provided by an embodiment of the present disclosure.

In a first aspect, with reference to Fig. 1, an embodiment of the present disclosure provides an application permission management method for managing application permissions, including following operations 100 and 101.

At operation 100, determining whether an application program has a behavior of abusing a permission of calling private data.

In some implementations, the privacy data includes, but is not limited to, at least one of: a mobile phone number, an address book, a short message, a call record, a photo album, a mail, a schedule, an internet record, a consumption record, a social media account number, a list of installed applications, location information, a clipboard, personal biometric information, an International Mobile Equipment Identity (IMEI), an International Mobile Subscriber Identity (IMSI), a Media Access Control (MAC) address, a camera, a microphone, or a sensor.

In some implementations, the permission of calling the private data for the application program includes, but is not limited to, at least one of: allowed only during use, allowed only this time, always allowed, not allowed, or the like.

In some implementations, the permission always allowed is at a highest level, the permission allowed only during use is at a second highest level, the permission allowed only this time is at a lower level, and the permission not allowed is at a lowest level.

The embodiment of the present disclosure does not limit the timing for determining whether the application program has the behavior of abusing the permission of calling the private data. For example, during the application calling the private data, whether the application program has the behavior of abusing the permission of calling the private data may be determined. For another example, whether the application program has the behavior of abusing the permission of calling the private data may be determined regularly or periodically.

Regardless of the timing for determining whether the application program has the behavior of abusing the permission of calling the private data, every time the application program calls the private data, calling record information of the application program calling the private data should be recorded, so that whether the application program has the behavior of abusing the permission of calling the private data can be subsequently determined, based on the calling record information.

In some implementations, the calling record information includes at least one of: information of the application program, information of a type of the called privacy data, information of timing of calling, information of statistics times of calling, or information representing whether the application program has the permission of calling the privacy data.

In some implementations, during the application calling the private data, whether the application program has the behavior of abusing the permission of calling the private data is determined, the application permission management method further includes: during the application program calling the private data, checking the permission of calling the private data for the application program; and determining whether the application program has the behavior of abusing the permission of calling the private data, based on the permission of calling the private data for the application program.

In some implementations, determining whether the application program has the behavior of abusing the permission of calling the private data, based on the permission of calling the private data for the application program, includes at least one of: in response to the permission of calling the private data being not "not allowed" for the application program, determining whether the application program has the behavior of abusing the permission of calling the private data, based on other information; in response to the permission of calling the private data being "not allowed" for the application program, directly determining that the application program has the behavior of abusing the permission of calling the private data, intercepting the behavior, of calling the private data, of the application program, due to the application program being not authorized on calling the private data .

The embodiment of the present disclosure does not limit the state of the application program during determining whether the application program has the behavior of abusing the permission of calling the private data. For example, whether the application program has the behavior of abusing the permission of calling the private data may be determined during the application program being started up, shut down, or running at the backend.

In some implementations, determining whether the application program has the behavior of abusing the permission of calling the private data, includes: determining whether the application program has the behavior of abusing the permission of calling the private data, based on at least one piece of following information: a timing at which the application program calls the private data; a number of times of the application program calling the private data; a frequency of the application program calling the private data; a position at which the application program stores the private data; a fact that the application program transmits the private data in plaintext; an object to which the application program shares the private data; or the permission of calling the private data for the application program.

For example, if the application program calls the private data in a time period between 23: 00 and 5: 00 in the morning for continuous days, and the number of the continuous days is greater than a first threshold value, it is determined that the application program has the behavior of abusing the permission of calling the private data.

For another example, if the number of times of the Ctrip application calling the private data of a terminal in a minute from 19: 16 to 19: 17 is greater than a second threshold value, it is determined that the Ctrip application has the behavior of abusing the permission of calling the private data.

For another example, if the application program stores the private data in a public data area, it is determined that the application program has the behavior of abusing the permission of calling the private data.

For another example, if the application program shares the private data to an application outside a list of privacy terms, it is determined that the application program has the behavior of abusing the permission of calling the private data.

For another example, if the application program calls the location information of the terminal at the backend, but the permission of calling the private data set by the user is "allowed only during use", it is determined that the application program has the behavior of abusing the permission of calling the private data.

In the embodiment of the present disclosure, whether the application program has the behavior of abusing the permission of calling the private data of the terminal, may be determined for a certain type of private data, or for two or more types of private data.

If whether the application program has the behavior of abusing the permission of calling the private data is determined for two or more types of privacy data, the number of times of the application program calling the privacy data is a total number of times of the application program calling the two or more types of privacy data, the position at which the application program stores the privacy data is a union of positions at which the application program stores the two or more types of privacy data, the object to which the application program shares the privacy data is a union of objects to which the application program shares the two or more types of privacy data, and the permission for the application program calling the privacy data is an AND operation of permissions of calling the two or more types of privacy data for the application program.

At operation 101, revoking the permission, of calling the private data, for the application program, in response to the application program having the behavior of abusing the permission of calling the private data.

In some implementations, revoking the permission, of calling the private data, for the application program, includes: popping up a dialog box for setting the permission of calling the private data for the application program, to enable a user to modify the permission of calling the private data for the application program, which is a manner for the user confirming the revoking.

The permission of calling the private data may be freely set for the application program by the user in the dialog box.

In some implementations, revoking the permission, of calling the private data, for the application program, includes at least one of: modifying the permission of calling the private data for the application program into a permission at a lower level; or, modifying the permission of calling the private data for the application program into a permission at the lowest level. That is, the revoking is performed in a manner of "intelligent revoking".

For example, the permission of calling the private data for the application program may be revoked in a manner of "gradually revoking", that is, the permission of calling the private data for the application program is lowered one level by one level. If the current permission is always allowed, the permission may be adjusted to be allowed only during use; and for subsequently revoking the permission, of calling the private data, for the application program, the permission is then sequentially adjusted to be allowed only this time, and not allowed.

For another example, the permission of calling the private data for the application program may be revoked in a manner of "revoking at one time", that is, the permission of calling the private data for the application program is directly adjusted to be a permission at the lowest level, that is, "not allowed".

In some implementations, if whether the application program has the behavior of abusing the permission of calling the private data is determined during the application program calling the private data, the application permission management method further includes: intercepting the behavior, of calling the private data, of the application program, in response to the application program having the behavior of abusing the permission of calling the private data.

In some implementations, the application permission management method further includes: determining a severity of the application program abusing the permission of calling the private data, in response to the application program having the behavior of abusing the permission of calling the private data; and revoking the permission, of calling the private data, for the application program, based on the severity.

In some implementations, the severity of the application program abusing the permission of calling the private data may be determined, based on at least one of: the number of times of determining that the application program has the behavior of abusing the permission of calling the private data, a degree of violation, of calling the same private data, of the application program, or whether the application program calls a plurality of pieces of private data in violation.

For example, if the number of times of the application program calling the private data at the backend is greater than a third threshold value, it is determined that the application program has the behavior of abusing the permission of calling the private data, and the severity of the application program abusing the permission of calling the private data is moderate.

After a period of time, if the number of times of the application program calling the private data is greater than a fourth threshold value, which is greater than the third threshold value, it is determined that the application program has the behavior of abusing the permission of calling the private data, and the severity of the application program abusing the permission of calling the private data is serious.

In some implementations, revoking the permission, of calling the private data, for the application program based on the severity, includes at least one of: in response to the severity being moderate, modifying the permission of calling the private data for the application program into a permission at a lower level; or, in response to the severity being serious, modifying the permission of calling the private data for the application program into a permission at the lowest level.

In some implementations, in response to the application program having the behavior of abusing the permission of calling the private data, the application permission management method further includes: determining whether a switch for intelligently revoking the permission is turned on; and in response to the the switch for intelligently revoking the permission being turned on, continuing to execute revoking the permission, of calling the private data, for the application program.

In some implementations, the application permission management method further includes: in response to the application program having the behavior of abusing the permission of calling the private data, displaying prompt information, for prompting the user that the application program has the behavior of abusing the permission of calling the private data.

In some implementations, in response to the switch for intelligently revoking the permission being turned off, the progress ends.

With the application permission management method in the embodiment of the present disclosure, whether the application program has the behavior of abusing the permission of calling the private data is monitored, and thus the safety of the private data of the terminal is improved.

In order to more fully present the application permission management method in the embodiment of the present disclosure, an example is described below for explanation, and the described example is not intended to limit the scope of the embodiment of the present disclosure.

### Example

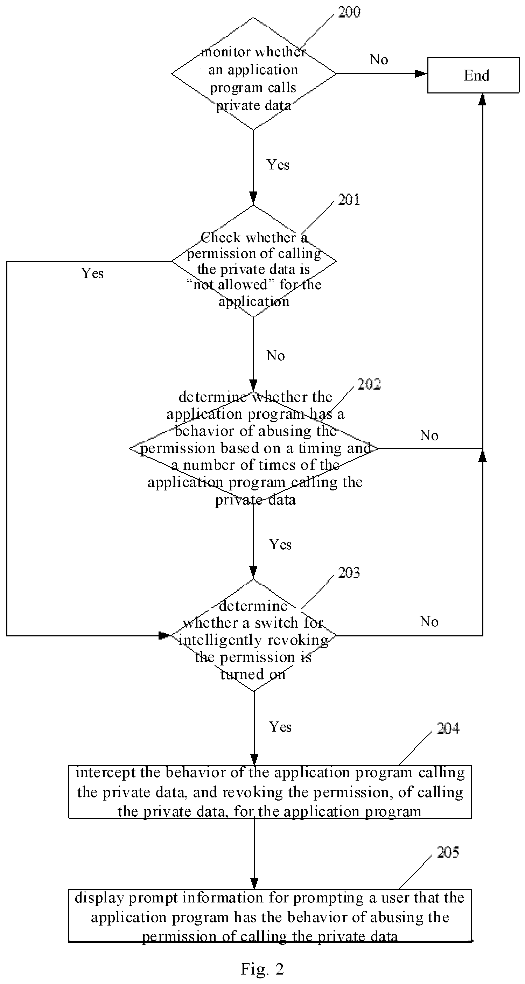

As shown in Fig. 2, in an example, the application permission management method includes following operations 200 to 205.

At operation 200, monitoring whether an application program calls private data, and if the application program calls the private data, continuing to execute operation 201; if the application program does not call the private data, ending the progress.

At operation 201, checking a permission of calling the private data for the application program, and if the permission is not "not allowed", continuing to execute operation 202; if the permission is "not allowed", executing operation 203.

At operation 202, determining whether the application program has a behavior of abusing the permission of calling the private data, based on a timing and a number of times of the application program calling the private data, and if the application program has the behavior of abusing the permission of calling the private data, continuing to execute operation 203; if the application program does not have the behavior of abusing the permission of calling the private data, ending the progress.

At operation 203, determining whether a switch for intelligently revoking the permission is turned on, and if the switch for intelligently revoking the permission is turned on, continuing to execute operation 204; if the switch for intelligently revoking the permission is not turned on, ending the progress.

At operation 204, intercepting the behavior of the application program calling the private data, and revoking the permission, of calling the private data, for the application program.

At operation 205, displaying prompt information for prompting a user that the application program has the behavior of abusing the permission of calling the private data.

In a second aspect, an embodiment of the present disclosure provides an electronic device, including: at least one processor; and a memory storing thereon at least one computer program which, when executed by the at least one processor, causes the at least one processor to implement the application permission management method described above.

The processor is a device having a capability of processing data, includes, but is not limited to, a Central Processing Unit (CPU), and the like; the memory is a device having a capability of storing data, includes, but is not limited to, a random access memory (RAM, in particular, SDRAM, DDR, and the like), a read only memory (ROM), an electrically erasable programmable read only memory (EEPROM), and a FLASH.

In some implementations, the processor and the memory are connected to each other via a bus, and then connected to other components of the computing device via the bus.

In a third aspect, an embodiment of the present disclosure provides a computer-readable storage medium, storing thereon a computer-readable storage medium which, when executed by a processor, causes the processor to implement the application permission management method described above.

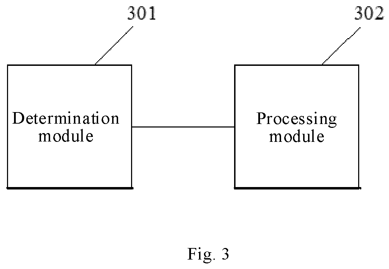

Fig. 3 is a block diagram of an application permission management apparatus provided by an embodiment of the present disclosure.

In a fourth aspect, with reference to Fig. 3, an embodiment of the present disclosure provides an application permission management apparatus, including: a determination module 301, configured to determine whether an application program has a behavior of abusing a permission of calling private data; and a processing module 302, configured to revoke the permission, of calling the private data, for the application program, in response to the application program having the behavior of abusing the permission of calling the private data.

In some implementations, the determination module 301 is configured to determine, during the application program calling the private data, whether the application program has the behavior of abusing the permission of calling the private data; and the processing module 302 is further configured to intercept the behavior of the application program calling the private data, in response to the application program having the behavior of abusing the permission of calling the private data.

In some implementations, the determination module 301 is further configured to check the permission of calling the private data for the application program; and determine whether the application program has the behavior of abusing the permission of calling the private data, based on the permission of calling the private data for the application program.

In some implementations, the processing module 302 is further configured to determine a severity of the application program abusing the permission of calling the private data; and revoke the permission, of calling the private data, for the application program, based on the severity.

In some implementations, the processing module 302 is further configured to, in response to the application program having the behavior of abusing the permission of calling the private data, determine whether a switch for intelligently revoking the permission is turned on; and in response to the switch for intelligently revoking the application permission being turned on, continue to execute revoking the permission, of calling the private data, for the application program.

In some implementations, the determination module 301 is configured to determine whether the application program has the behavior of abusing the permission of calling the private data, based on at least one piece of following information: a timing at which the application program calls the private data; a number of times of the application program calling the private data; a frequency of the application program calling the private data; a position at which the application program stores the private data; a fact that the application program transmits the private data in plaintext; an object to which the application shares the private data; or the permission of calling the private data for the application program.

In some implementations, the processing module 302 is configured to revoke the permission, of calling the private data, for the application program, by: popping up a dialog box for setting the permission of calling the private data for the application program, to enable a user to modify the permission of calling the private data for the application program.

In some implementations, the processing module 302 is configured to revoke the permission, of calling the private data, for the application program, by at least one of: modifying the permission of calling the private data for the application program into a permission at a lower level; or, modifying the permission of calling the private data for the application program into a permission at the lowest level.

The implementation process of the application permission management apparatus is the same as that of the application permission management method described above, and thus is not repeated here.

It should be understood by those skilled in the art that all or some of the operations of the method, and the functional modules/components in the apparatus, disclosed above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). The computer storage medium includes volatile/nonvolatile or removable/non-removable medium used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a Digital Video Disk (DVD) or other optical disc storages, magnetic cassettes, magnetic tapes, magnetic disks or other magnetic storage devices, or any other medium which can be used to store the desired information and can be accessed by a computer. The communication medium generally includes computer-readable instructions, data structures, program modules or other data in a modulated data signal, such as a carrier wave or other transmission mechanism, and may include any information delivery medium.

The exemplary embodiments have been disclosed herein, and although specific terms are employed, they are used and should only be interpreted in a generic and descriptive meaning and not for purposes of a limitation. It is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present disclosure as set forth in the appended claims.

## Claims

1. An application permission management method, comprising:
determining whether an application program has a behavior of abusing a permission of calling private data; and
revoking the permission, of calling the private data, for the application program, in response to the application program having the behavior of abusing the permission of calling the private data.

2. The application permission management method of claim 1, wherein whether the application program has the behavior of abusing the permission of calling the private data is determined during the application program calling the private data; and
the application permission management method further comprises:
in response to the application program having the behavior of abusing the permission of calling the private data, intercepting the behavior of the application program calling the private data.

3. The application permission management method of claim 2, further comprising:
during the application program calling the private data, checking the permission of calling the private data for the application program; and
determining whether the application program has the behavior of abusing the permission of calling the private data, based on the permission of calling the private data for the application program.

4. The application permission management method of claim 1, further comprising:
determining a severity of the application program abusing the permission of calling the private data, in response to the application program having the behavior of abusing the permission of calling the private data; and
revoking the permission, of calling the private data, for the application program, based on the severity.

5. The application permission management method of claim 1, further comprising:
in response to the application program having the behavior of abusing the permission of calling the private data, determining whether a switch for intelligently revoking the permission is turned on; and
in response to the switch for intelligently revoking the application permission being turned on, continuing to execute revoking the permission, of calling the private data, for the application program.

6. The application permission management method of any one of claims 1 to 5, wherein determining whether the application program has the behavior of abusing the permission of calling the private data, comprises:
determining whether the application program has the behavior of abusing the permission of calling the private data, based on at least one piece of following information:
a timing at which the application program calls the private data;
a number of times of the application program calling the private data;
a frequency of the application program calling the private data;
a position at which the application program stores the private data;
a fact that the application program transmits the private data in plaintext;
an object to which the application shares the private data; or
the permission of calling the private data for the application program.

7. The application permission management method of any one of claims 1 to 5, wherein revoking the permission, of calling the private data, for the application program, comprises:
popping up a dialog box for setting the permission of calling the private data for the application program, to enable a user to modify the permission of calling the private data for the application program.

8. The application permission management method of any one of claims 1 to 5, wherein revoking the permission, of calling the private data, for the application program, comprises at least one of:
modifying the permission of calling the private data for the application program into a permission at a lower level; or
modifying the permission of calling the private data for the application program into a permission at a lowest level.

9. An electronic device, comprising:
at least one processor; and
a memory, storing thereon at least one computer program which, when executed by the at least one processor, causes the at least one processor to implement the application permission management method of any one of claims 1 to 8.

10. A computer-readable storage medium, storing thereon a computer program which, when executed by a processor, causes the processor to implement the application permission management method of any one of claims 1 to 8.
